Europäisches Patentamt

European Patent Office

Office européen des brevets

(11) Publication number: **0 193 337**
**B1**

(12) **EUROPEAN PATENT SPECIFICATION**

(45) Date of publication of patent specification: **28.12.88**

(21) Application number: **86301142.5**

(22) Date of filing: **19.02.86**

(51) Int. Cl.⁴: **F 16 B 13/04, F 16 B 39/38, F 16 B 29/00, F 16 B 37/04**

(54) Screw grommet.

(30) Priority: **22.02.85 JP 33910/85**

(43) Date of publication of application:
**03.09.86 Bulletin 86/36**

(45) Publication of the grant of the patent:
**28.12.88 Bulletin 88/52**

(84) Designated Contracting States:
**DE FR GB**

(56) References cited:
**EP-A-0 150 605**
**US-A-3 933 076**
**US-A-4 070 945**
**US-A-4 077 300**
**US-A-4 082 030**
**US-A-4 136 599**
**US-A-4 293 260**
**US-A-4 301 706**

(73) Proprietor: **TUCKER FASTENERS LIMITED**
**Walsall Road**
**Birmingham B42 1BP (GB)**
㊳ **GB**

(73) Proprietor: **EMHART INDUSTRIES, INC.**
**426 Colt Highway**
**Farmington Connecticut 06032 (US)**
㊳ **DE FR**

(72) Inventor: **Yuta, Kiyoteru**
**59 Aza Higashisatonaka Osaki-cho**
**Toyohashi-shi Aichi (JP)**

(74) Representative: **Wetters, Basil David Peter et al**
**Emhart Patents Department Lyn House 39 The Parade**
**Oadby, Leicester LE2 5BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a screw grommet for use in connecting a member such as a panel to a vehicle body or the like.

A commonly-known screw grommet comprises a shank and a flange and is used to connect a panel to a vehicle body by inserting the shank into a mounting hole of the vehicle body for engagement and by screwing the screw, which has been passed through a mounting hole of the panel, into a hole of the shank. This screw grommet is convenient as it can connect a panel by screwing without fixing a nut in the case of a vehicle body made of a thin plate. Screw grommets of this kind are described in many information sources inlcuding, for example specification GB—A—884 815.

A self-tapping screw is often used with such a screw grommet as just referred to, and the screwing operation is done with the aid of an impact wrench (or screw driver). Therefore, when the mounting hole of the vehicle body is round, the screw grommet tends to rotate together with the screw, failing to achieve a sufficiently secure connection. To prevent this, a square hole may be formed in the vehicle body. Alternatively in the case of a round hole, it is also a practice for another hole to be formed adjacent to the mounting hole for engagement by a transversely-extending finger provided on the screw grommet which prevents the grommet from rotating.

However, these seconds holes cannot readily be formed without appropriate presswork on the vehicle body. Otherwise, forming an additional hole increases the number of steps. Accordingly, it is desirable to provide a screw grommet which can produce a sufficiently strong attaching force with only one round hole formed by simple drilling.

In EP—A—0 150 605 (state of the art according to Article 54(3) of the EPC) is disclosed a screw grommet for use in connecting together two plate members by inserting the grommet into a hole in one of the members and introducing a screw through a hole in the other member and into the grommet, the grommet comprising a body portion and a nut portion moulded as one piece of thermoplastic material, the body portion comprising a hollow shank with a head flange at one end to engage the exposed surface of said one of the members when the grommet is inserted into the hole in it, and the shank having an external surface which provides shoulders to lightly engage the other surface of said one of the members to resist accidental ejection of the grommet from said hole after insertion, and the nut portion being hollowed to be engaged by the screw, the body portion and nut portion being interconnected by thin wall portions which break on said portions being drawn together by advance of the nut portion when a screw introduced thereinto is rotated, confronting complementary ends of the body portion and nut portion being V-shaped with wedge-shaped end walls of the nut portion accommodated in diverging end walls of the body portion whereby, when the nut portion advances, the body portion spreads out in opposite directions to overlie the blind side of the said one of the members and thereby firmly secure the grommet against withdrawal.

It is therefore an object of the present invention to provide an improve screw grommet which does not rotate together with the screw when the latter is screwed in even if the mounting hole is round.

According to the invention, there is provided a screw grommet for connecting together two plate members by inserting the grommet into a hole in one of the members and introducing a screw through a hole in the other member and into the grommet complete, characterised by comprising engagement means to lock the nut portion and the shank of the body portion together as tightening of the screw is completed, and such engagement means may take the form of annular groove in the nut portion and pawls formed in the shank.

There now follows a detailed description of a grommet in accordance with the invention, and selected to illustrate the invention by way of example, which description is to be read reference to the accompanying drawings, in which:

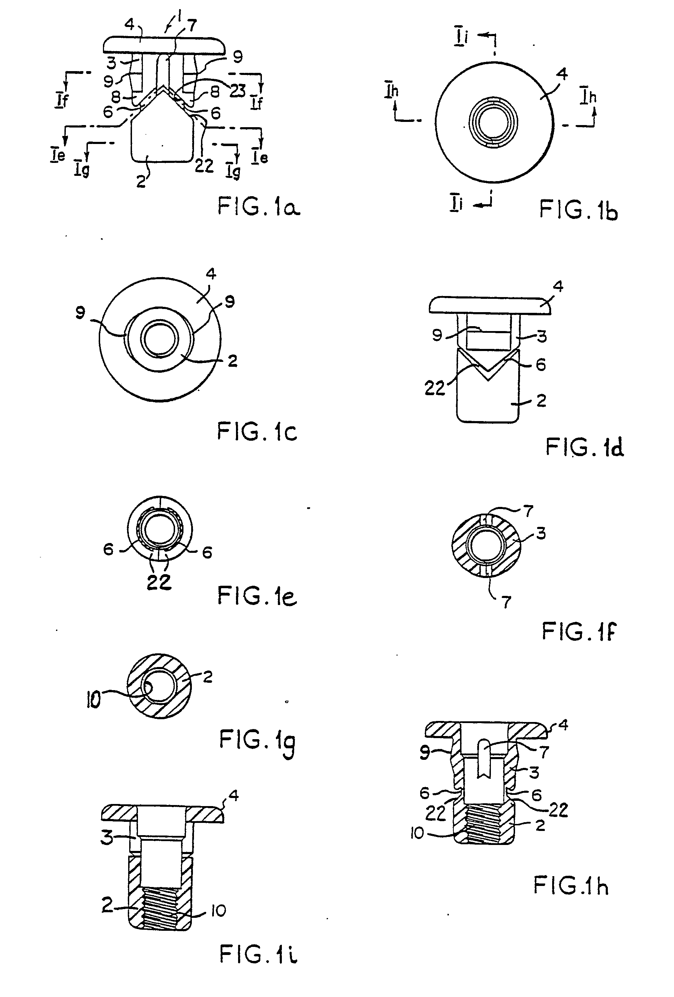

Figures 1(a)—(i) shows the illustrative grommet,

(a) in front view,
(b) in plan view,
(c) in underneath view,
(d) in side view,
(e) in sectional view taken along the line (e)—(e) of Figure 1(a),
(f) in sectional view taken along the line (f)—(f) of Figure 1(a);
(g) in sectional view taken along the line (g)—(g) of Figure 1(a),
(h) in sectional view taken along the line (h)—(h) of Figure 1(b); and
(i) is a sectional view taken along the line (i)—(i) of Figure 1(b);

Figure 2 is an explanatory illustration showing how the illustrative grommet may be used;

Figure 3 is a sectional view showing a completed fixing;

Figure 4(a)—(i) are similar to Figures 1(a)—(i) but depict a modified form of the illustrative grommet using the same reference numerals for corresponding parts;

Figure 5 is a sectional view showing the grommet of Figure 4 in partially secured condition;

Figure 6 is a sectional view similar to Figure 5 but showing the grommet in fully secured condition; and

Figure 7 is a front view of the fully secured grommet of Figure 6.

In Figures 1(a)—(i), the screw grommet according to the present invention comprises a body 1 and a hollow plug or nut 2. The body 1 has a hollow shank 3 and a flange 4 at the upper end thereof, and the plug 2 is disposed at the lower end of the shank 3. The body 1 and plug 2 are made of a plastic material and are formed as one-piece initially connected through semi-annular thin portions 6.

The shank 3 of the body is hollow, preferably with the inside diameter of its upper portion made slightly larger than that of the lower portion so as to facilitate the insertion of the screw. It is preferable that both inside diameters are made slightly larger than the outside diameter of the screw. As shown in Figure 1(a), the plug 2 is formed preferably in a wedge-like shape with converging end walls 22 to be driven into the shank 3 of the body. Further, it is preferred that the shank 3 of the body is formed in a complementary configuration to the plug 2, with diverging end walls 23. Preferably, slits 7 extending upwardly from the lower end when the wall 23 are formed in the side surface of the shank 3. With these features, the plug 2 can easily enter the shank 3 from the lower end of the latter and can easily expand lower end portions 8, 8 of the shank radially outwardly. Engagement protrusions 9, 9 are formed on the outer side of the shank 3 to lightly engage with a mounting hole of a vehicle body or the like to serve for temporary connection against accidental ejection. An internally threaded portion 10 is formed on the inner side of the plug 2 so as to prevent the grommet from rotating together with the screw even at the early stage of the screw rotation.

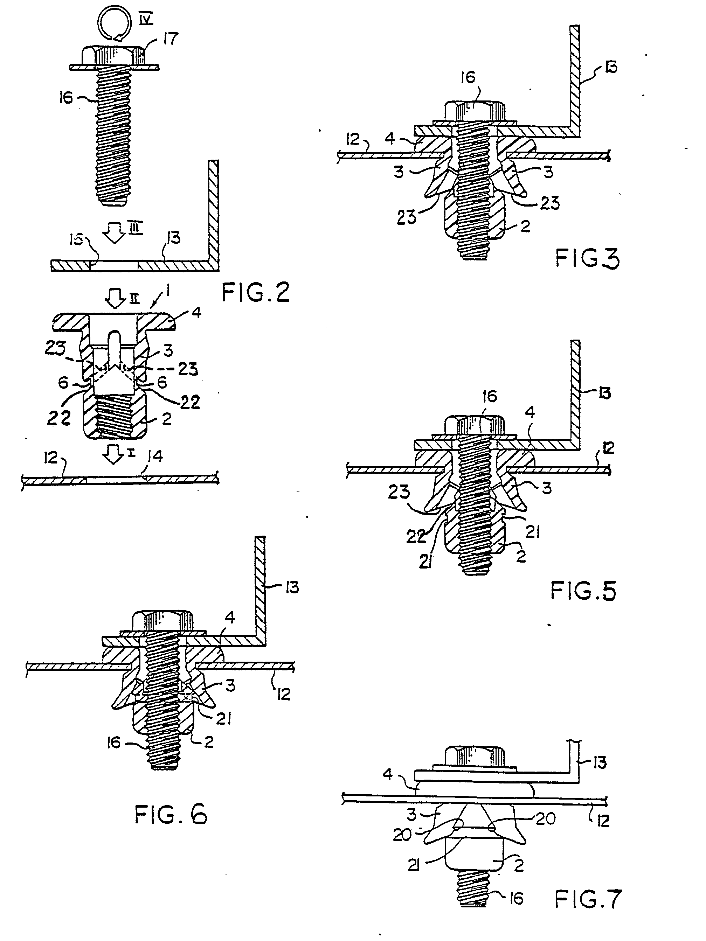

Figure 2 shows the procedure to connect a panel 13 to a vehicle body 12 by the use of the screw grommet. To begin with, as indicated by Arrow I, the plug 2 and the shank 3 of the body are inserted into a round mounting hole 14 of the vehicle body 12, and the grommet is lightly engaged with the vehicle body by means of the lower surface of the flange 4 and the engagement protrusions 9, 9 of the shank 3 so that it will not fall out. Next, as indicated by Arrow II, a mounting hole 15 of the panel 13 is brought in line with the hollow portion of the shank 3, and a screw 16 is screwed in by an impact wrench (or screw driver) as indicated by Arrows III and IV. Alternatively, the screw 16 may be inserted into the mounting hole 15 of the panel 13 before the panel is brought into engagement with the body 1.

With the rotation of the screw 16, firstly the tip of the screw is screwed into the internally threaded portion 2. The screw 16 advances inside the internally threaded portion, and a head 17 of the screw 16 comes into surface-contact with the panel 13 to push it. By further rotating the screw 16, the plug 2 is drawn upward gradually to break the thin portions 6. After the thin portions 6 have been broken, the wedge-like tip of the plug comes in contact with inclined surfaces of the lower ends 8, 8 of the body shank which are in the complementary configuration. Then the plug, on further advance towards the body 1, expands them radially in opposite directions from the slits 7 as shown in Figure 3. With the expansion, the attaching force of the shank of the body to the vehicle body 12 increases. The attaching force is strengthened by drawing the plug upward, and the grommet is prevented from being rotated by frictional resistance between the body 1 and panel 13, which is greater than the frictional force between the screw 16 and the internally threaded portion 10. Thus, even if the mounting hole 15 of the vehicle body is formed as a round hole (not as a square one), the grommet does not rotate with the screw 16.

Of course, the mounting hole 15 can be a square one. In this case, a tapping screw or the like can be used without threading the inner surface of the plug if the outer surface of the shank is formed to be square.

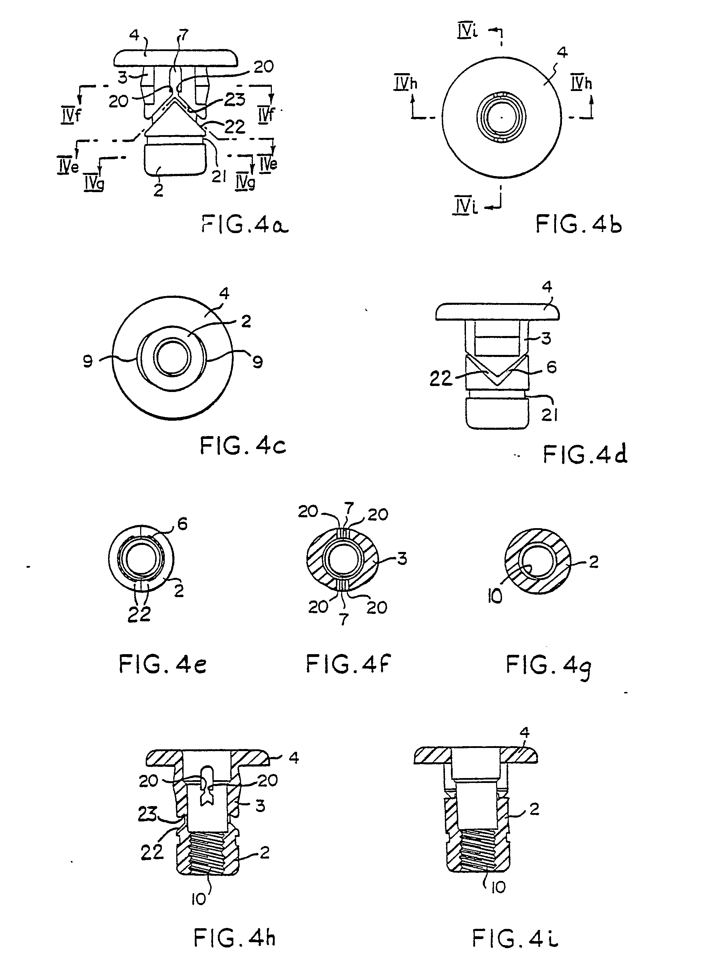

Figures 4(a)—(i) show a second embodiment of the present invention. This screw grommet is identical to the first embodiment in which the body 1 comprises the shank 3 and the flange 4 and the plug 2 is integrally connected through the thin portions 6 of the body. In this embodiment, engagement pawls 20 are formed at the lower end of the shank 3 at either side of the slits 7, and an annular engagement groove 21 is formed on the outer surface of the plug 2. Thus, the engagement pawls 20 and the engagement groove 21 compose engagement means to connect the plug to the body.

In operation, the lower end of the shank of the body is expanded slightly radially outwardly by drawing the plug 2 into the shank 3 of the body as shown in Figure 5, and the plug 2 is further drawn in by the rotation of the screw 16 as shown in Figure 6. Then, the engagement pawls 20 of the shank of the body enter the engagement groove of the plug 2 and the plug 2 is connected to the body 1. This condition is shown in Figure 7. Since the plug 2 and the body 1 are connected to each other as described above, when the screw 16 is removed to change the panel 13 or for other purposes, the plug 2 is prevented from falling off the body 12 to eliminate the trouble to pick up and hold the plug against the body for reuse.

The second embodiment is also provided with the engagement means comprising engagement pawls of the shank of the body and an annular groove of the plug. So far as it enables the plug to engage with the body when the former is drawn into the shank of the body, however, any suitable engagement means can be adopted. For example, it can be a combination either of a protrusion and a recess or of two shoulders to be engaged with each other.

**Claims**

1. A screw grommet for use in connecting together two plate members by inserting the grommet into a hole in one of the members and introducing a screw through a hole in the other member and into the grommet, the grommet comprising a body portion and a nut portion (2) moulded as one piece of thermoplastic material, the body portion comprising a hollow shank (3) with a head flange (4) at one end to engage the exposed surface of said one of the members when the grommet is inserted into the hole in it, and the shank having an external surface which provides shoulders (9) to lightly engage the other surface of said one of the members to resist accidental ejection of the grommet from said hole after insertion, and the nut portion being hollow to be engaged by the screw, the body portion and nut portion being interconnected by thin wall portions (6) which break on said portions being drawn together by advance of the nut portion when a screw introduced thereinto is rotated, confronting complementary ends of the body portion and nut portion being V-shaped with wedge-shaped end walls (22) of the nut portion accommodated in diverging end walls (23) of the body portion whereby, when the nut portion advances, the body portion spreads out in opposite directions to overlie the blind side of the said one of the members and thereby firmly secure the grommet against withdrawal, characterised in that the grommet also comprises engagement means (20, 21) to lock the plug portion (2) in the shank (3) of the body portion as tightening of the screw is completed.

2. A screw grommet according to claim 1, wherein said engagement means comprising an annular groove (21) in the nut portion (2) and pawls (20) formed in the shank (3).

**Patentansprüche**

1. Halteöse für Schrauben beim Verbinden von zwei Plattenteilen, wobei die Halteöse in ein Loch in einem der Teile und eine Schraube durch ein Loch in dem anderen Teil und in die Halteöse eingesetzt werden, wobei die Halteöse einen Körperabschnitt und einen als Mutter dienenden Gewindeabschnitt umfaßt, die einteilig aus thermoplastischem Material geformt sind, wobei der Körperabschnitt einen Hohlschaft mit einem Kopfflansch an einem Ende aufweist, welcher die freigelegte Oberfläche des einen Plattenteiles ergreifen kann, wenn die Halteöse in dessen Loch eingesetzt ist, wobei der Schaft eine Schultern bildende Außenfläche aufweist, um die andere Fläche des anderen Plattenteiles geringfügig zu ergreifen und ein unbeabsichtigtes Auswerfen der Öse aus dem Loch nach dem Einsetzen zu verhindern, wobei der von der Schraube ergreifbare Gewindeabschnitt hohl ist und der Körperabschnitt und der Gewindeabschnitt über dünne Wandabschnitte miteinander verbunden sind, die brechen, wenn diese Abschnitte durch Voreilen des Gewindeabschnittes zusammengezogen werden, wenn eine eingesetzte Schraube gedreht wird, wobei einander zugewandte komplementäre Enden des Körperabschnittes und des Gewindeabschnittes V-förmig ausgebildet sind und keilförmige Endwände des Gewindeabschnittes in divergierenden Endwänden des Körperabschnittes aufgenommen sind, so daß bei Voreilen des Gewindeabschnittes sich der Körperabschnitt in entgegengesetzte Richtungen spreizt und sich über die Blindseite des einen Plattengliedes legt, so daß die Halteöse gegen ein Herausziehen fixiert ist, dadurch gekennzeichnet, daß die Halteöse eine Eingriffseinrichtung (20, 21) aufweist, mittels welcher der Gewindeabschnitt (2) im Schaft (3) des Körperabschnittes beim Festziehen der Schraube verriegelbar ist.

2. Halteöse nach Anspruch 1, dadurch gekennzeichnet, daß die Eingriffseinrichtung eine Ringnut (21) in dem Gewindeabschnitt (2) und in dem Schaft (3) ausgebildete Klauen (20) umfaßt.

**Revendications**

1. Rivet à vis destiné à être utilisé pour l'assemblage de deux pièces en forme de plaque entre elles par insertion du rivet dans un trou ménagé dans une première de ces pièces et introduction d'une vis à travers un trou que présente la seconde pièce, et dans le rivet, ce rivet comprenant une partie formant corps et une partie formant écrou (2) moulées sous la forme d'une seule pièce de matière thermoplastique, la partie formant corps comprenant une tige creuse (3) comportant à une extrémité une collerette de tête (4) destinée à venir au contact de la surface accessible de ladite première pièce lorsqu'on insère le rivet dans le trou de cette pièce, la tige présentant une surface extérieure qui offre des épaulements (9) destinés à maintenir légèrement l'autre surface de la première pièce afin de résister à une éjection accidentelle du rivet hors du trou après insertion, la partie-écrou étant creuse de façon à recevoir la vis et la partie formant corps et la partie-écrou étant reliées entre elles par des portions de paroi mince (6) qui se rompent lorsque ces parties font l'objet d'une traction l'une vers l'autre du fait de l'avance de la partie-écrou lorsqu'on fait tourner une vis introduite dans celle-ci, tandis que des extrémités complémentaires et en regard de la partie formant corps et de la partie-écrou ont une forme en V, avec des faces extrêmes en forme de coin (22) de la partie-écrou logées entre des faces extrêmes divergentes (23) de la partie formant corps, de sorte que, lorsque la partie-écrou avance, la partie formant corps se déploie dans des sens opposés de façon à surplomber la face cachée de la première pièce et à immobiliser ainsi fermement le rivet contre toute extraction, ce rivet étant caractérisé en ce qu'il comprend aussi des moyens de solidarisation (20, 21) destinés à immobiliser la partie-cheville (2) dans la tige (3) de la partie formant corps, une fois achevé le serrage de la vis.

2. Rivet à vis suivant la revendication 1, dans lequel les moyens de solidarisation sont constitués par une gorge annulaire (21) ménagée dans la partie-écrou (2) et des doigts d'encliquetage (20) formés sur la tige (3).

FIG. 1a

FIG. 1b

FIG. 1c

FIG. 1d

FIG. 1e

FIG. 1f

FIG. 1g

FIG. 1h

FIG. 1i

FIG.2

FIG.3

FIG.5

FIG. 6

FIG.7

FIG.4a

FIG.4b

FIG.4c

FIG.4d

FIG.4e

FIG.4f

FIG.4g

FIG.4h

FIG.4i

3